# EUROPEAN PATENT APPLICATION

(11) **EP 4 372 113 A1**
(43) Date of publication of application: **22.05.2024**
(21) Application number: 22214480.0
(22) Date of filing: 19.12.2022
(51) Int. Cl.: C22B 7/00, C01D 15/08, C22B 26/12

(54) **LITHIUM RECOVERY FROM LITHIUM-ION BATTERIES**

(30) Priority: 18.11.2022 US 202263426651 P; 18.11.2022 US 202217990517
(71) Applicant: Ascend Elements, Inc., Westborough, MA 01581 (US)
(72) Inventor: Kim, Kee-Chan, Westborough, 01581 (US); Gratz, Eric, Westborough, 01581 (US)
(74) Representative: Greaves Brewster LLP

(57) **Abstract**

Recycling of charge material for an NMC (Ni, Mn, Co) battery recovers lithium from a recycled battery stream by roasting a black mass from the recycled stream in a partial oxygen environment at a temperature based on the thermal reduction of cathode material and reacting carbon in an anode material with lithium in the cathode material, and then leaching the lithium from the roasted black mass for forming a lithium leach solution. Lithium is recovered by heating the lithium leach solution, precipitating the lithium carbonate based on decreased solubility of the leached lithium carbonate at the increased temperature.

## Description

### BACKGROUND

Lithium-ion (Li-ion) batteries are a preferred chemistry for secondary (rechargeable) batteries in high discharge applications such as electrical vehicles (EVs) and power tools where electric motors are called upon for rapid acceleration. Li-ion batteries include a charge material, conductive powder and binder applied to or deposited on a current collector, typically a planar sheet of copper or aluminum. The charge material includes anode material, typically graphite or carbon, and cathode material, which includes a predetermined ratio of metals such as lithium, nickel, manganese, cobalt, aluminum, iron and phosphorous, defining a so-called "battery chemistry" of the Li-ion cells.

### SUMMARY

Lithium recovery from a recycled stream of Lithium-Ion (Li-ion) batteries includes roasting a black mass of comingled charge material in a partial oxygen environment, during which carbon from anode material in the black mass combines with lithium from cathode material in the black mass to form lithium carbonate. A subsequent purification upgrades the recycled lithium carbonate from industrial to battery grade. A balance of roasting temperatures and available oxygen causes a sequence of reactions to first form lithium oxide at the temperature of roasting and a second reaction to combine Li with the oxygen and anode carbon without requiring the addition of separate carbon sources such as activated carbon to supplement the production of lithium carbonate.

Configurations herein are based, in part, on the observation that lithium recovery is beneficial to battery recycling for cost reduction, as opposed to sourcing refined stock of pure lithium. Unfortunately, conventional approaches to Li recovery suffer from the shortcoming that carbon, already readily available in the anode material of the recycling stream, is supplemented with added sources of carbon, such as activated carbon, for yielding Li. This requires additional carbon resources for extracting the Li and leaves additional carbon in the recycling stream that would need to be removed at subsequent recycling steps. Accordingly, configurations herein substantially overcome the shortcomings of conventional added carbon approaches by a partial oxygen roasting that consumes the carbon already present in the black mass from anode material but does not interfere with the thermal reduction of the cathode material for recycling lithium as lithium carbonate.

An example configuration employs NMC (Ni, Mn, Co) batteries for recovering lithium from a recycling stream by roasting a black mass from the recycling stream in a partial oxygen environment at a temperature selected for reductive decomposition of the cathode material and reacting carbon in the anode material with lithium in the cathode material, and then leaching the lithium from the roasted black mass for forming a lithium leach solution. Lithium is recovered by heating the lithium leach solution for precipitating the lithium based on decreased solubility of the leached lithium at the increased temperature, as the Li precipitates out of solution as Li₂CO₃ at increased temperatures.

### BRIEF DESCRIPTION OF THE DRAWINGS

The foregoing and other features will be apparent from the following description of particular embodiments disclosed herein, as illustrated in the accompanying drawings in which like reference characters refer to the same parts throughout the different views. The drawings are not necessarily to scale, emphasis instead being placed upon illustrating the principles of the invention.
Fig. 1 is a flowchart of partial oxygen roasting for Li recovery as disclosed herein;
Fig. 2 is a flowchart of purification of the Li from the leachate of Fig. 1;
Fig. 3 is a results chart of the analysis of the leachate of Figs. 1;
Fig. 4 is a results chart of the Li purification of Fig. 2; and
Fig. 5 shows the results of iterative leach cycles.

### DETAILED DESCRIPTION

Depicted below is an example method and approach for recycling batteries such as Li-Ion batteries, often from a recycling stream of multiple battery chemistries including nickel, manganese, cobalt and aluminum in various ratios. In general, modern secondary (rechargeable) batteries employ metals such as Ni, Mn, Co and Al along with a binder and conductive material as a cathode material, and graphite or similar forms of carbon as an anode material. Recycling is typically commenced with discharging and physical dismantling, crushing, and/or agitating the battery casing structure to yield a granular, comingled stock referred to as "black mass," including cathode, anode, and various casing and conductor materials. Retired or defective electric vehicle (EV) batteries are often sought for their large volume of raw charge materials for recycling.

Conventional roasting approaches to lithium recycling employ an inert or reducing gas environment and include the addition of a carbon source, such as activated carbon, despite a relative abundance of carbon from the anode material. Configurations herein, in contrast, employ a partial oxygen environment that utilizes the carbon already present in the black mass as the carbon source, but does not interfere with the thermal reduction and decomposition of the cathode material. Configurations discussed below demonstrate that a small amount of oxygen in the partial O₂ environment effectively activates the carbon in the anode material source, without harming the thermal reduction/decomposition in the NMC cathode material, thereby obviating the need for additional activated carbon.

The black mass from recycled Li-ion batteries includes a mixture of anode and cathode charge materials, as well as impurities such as copper, aluminum and iron used in the physical battery casing and contacts that interconnect the individual cells, typically in a shape that engages the EV that uses the battery pack. This black mass therefore contains a particulate form of battery materials including charge material metals, carbon/graphite, lithium and electrolyte, in a somewhat variable ratio based on the arrangement and type of the batteries in the source recycling stream. Arrangement by battery chemistry and/or vehicle manufacturer may or may not be well defined. The presence of substantial amounts of lithium from the cathode and of carbon from the anode can be expected, however, regardless of the precise battery chemistry.

Roasting the black mass from recycled lithium-ion batteries facilitates recovery of valuable metals, such as Li, Ni, Mn and Co, from the spent batteries. Conventional approaches, however, employ an inert environment (N₂ or Ar) or reducing gas environment (H₂ or CH₄) in order to reduce the active transition metal ions of the cathode materials. In an inert environment, higher roasting temperatures are often required to complete the reduction, and also activated carbon is added for boosting the carbothermal reduction, even though the black mass already has plenty of carbon from the anode graphite, increasing energy consumption and operating expense. In a reducing environment, an explosive or highly flammable gas component requires strict safety control, imposing additional costs for the environment gas composition. Roasting black mass in an inert or reducing environmental atmosphere also often causes further reduction of the transition metals forming their alloys, which is problematic for the transition recovery in downstream recycling targeting the charge material metals.

Configurations described below address the above problems by employing a partial oxygen environmental atmosphere for the black mass roasting. It is believed that partial oxygen in the roasting environment activates the relatively thermally stable graphite in the black mass and allows the graphite to become the carbon source for the carbothermal reduction. Second, the partial oxygen environment prevents the complete reduction of the transition metal ions to the metal or alloy state and rather reduces the transition metal ions to the more soluble lower oxidation states (mostly +2, such as NiO, CoO, and MnO) in a dilute aqueous acidic solution. Third, since the partial oxygen environment activates the graphite, this also allows lithium from the cathode materials to form lithium carbonate and increases the lithium recovery yield compared to the conventional inert environment over similar roasting temperatures and time. In addition, black mass roasting in the partial oxygen environment is believed to consume less than 15%, including only 9-12 % of the graphite in the black mass, and therefore the majority of the graphite can still be recovered as recycled anode material for lithium-ion batteries after leaching of the cathode metal ions. In other words, recovery of the lithium carbonate has very little impact on the effectiveness of downstream carbon and charge material recovery. The effectiveness of the partial oxygen roasting environment over an inert gas environment is depicted in Table 1:

**TABLE I**

| **Test No.** | **Environmental Gas** | **Roasting Temp. (°C)** | **Roasting T (min.)** | **Li in the Leachate (mg/L)** |
|---|---|---|---|---|
| **1** | N₂ | 610 | 30 | 1187.29 |
| **2** | 3.5 - 4.3 % O₂ balanced with N₂ | 610 | 30 | 1292.08 |

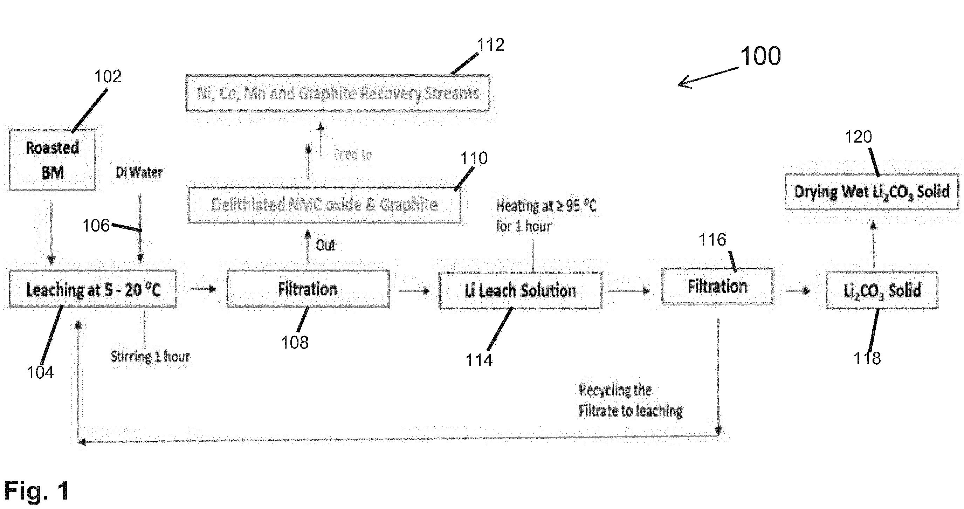

Fig. 1 is a flowchart of an embodiment of a method of partial oxygen roasting for Li recovery disclosed herein. Referring to Fig. 1, the roasting process 100 includes, at step 102, roasting a black mass, provided from a lithium-ion battery recycling stream, in a partial oxygen environment at a temperature that is greater than 500°C. The temperature can be based on the thermal reduction/decomposition of the cathode material and reacting carbon in the anode material with lithium in the cathode material. The black mass typically results from a recycling stream of Ni, Mn, Co (NMC) batteries. The roasting converts the lithium in the black mass to lithium carbonate from the available carbon in the black mass from the anode material.

The partial oxygen environment is defined by an oxygen environment having a lower concentration of oxygen than atmospheric oxygen and a nitrogen concentration greater than atmospheric nitrogen. In a particular configuration, the partial oxygen percentage is 2-10 %, preferably 3-5 % and is balanced with an inert gas such as nitrogen or argon, defining an environment with less oxygen and more nitrogen (or other inert gas) than an ambient atmosphere (i.e., air). The roasting temperature can be between 550 °C and 700 °C, preferably between 575 °C and 650 °C, which causes the carbon already present from the anode to begin to react with the oxygen (below 500°C, the carbon would be expected to remain inert). Roasting the black mass is believed to cause a carbothermal reaction with the oxygen in the partial oxygen environment in an absence of additional activated carbon. When the cathode material is exposed to > 500°C, the transition metals in the cathode material are also thermally reduced and decomposed, and the lithium in the cathode is initially transformed to lithium oxide. The Li₂O is converted to Li₂CO₃ when carbon and oxygen is available. The reactions (1) and (2) are very fast and likely occur almost simultaneously:

LiNiₓMn_{y}Co_{z}O₂ + Heat → Li₂O + *x*[NiO/Ni] + *y*[MnO /Mn₂O₄] + *z*[CoO/Co₃O₄/Co] (1),

wherein 1 ≥ *x*+*y*+*z* ≥ 0.9; 0.99 ≥ *x* ≥ 0.33; 0.33 ≥ *y* ≥ 0.01; 0.33 ≥ *z* ≥ 0.01 and

   Li₂O + *C_{(Graphite)}* + *p*O₂ → Li₂CO₃ + *(1-p)*C*_{(Graphite)}* + *q*(CO₂/CO) (2)
wherein 0.1 ≥ *p* ≥ 0.01 and 0.1 ≥ *q* ≥ 0.01 in the environmental atmosphere
The equations (1) and (2) demonstrate that, as the black mass includes anode materials having graphite, and cathode materials including lithium and charge material metals, roasting combines carbon from the graphite with oxygen in the partial oxygen environment for forming CO and CO₂, which combine with lithium to form water soluble lithium carbonate. The thermal treatment time of the roasting can vary by is typically between 10 minutes and 120 minutes, preferably 30-60 minutes. As shown in Fig. 1, following roasting, the lithium compound can be leached from the roasted black mass by agitating it in deionized water, as depicted at step 104, forming an aqueous lithium leach solution.

The lithium employed in the disclosed approach is a lithium salt combined with charge material metals in the recycling source, and precipitated as lithium salts as the yielded lithium product. The examples herein depict lithium carbonate as a resulting lithium salt, facilitated by the increased solubility at lower, rather than higher, temperatures, however other lithium products may be achieved.

The lithium product, Li₂CO₃, is the only water leachable compound in the roasted black mass; the remainder is not soluble in water. Therefore, lithium carbonate can be selectively leached from the roasted black mass using deionized water. Filtering of the lithium leach solution separates insoluble materials from the dissolved lithium salts.

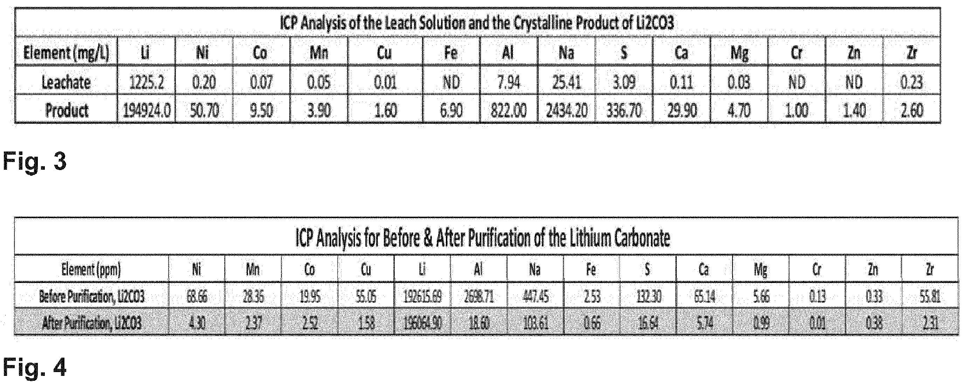

In addition, the electrolyte, typically LiPF6, is decomposed to lithium fluoride and phosphorus fluoride compounds (PF₅, PF₃, OPF₃, HF, etc.) during the roasting. The lithium carbonate leach solution is a weakly basic solution (pH = 11 - 12). Therefore, a noticeable amount of aluminum is dissolved into the lithium leach solution, along with trace amounts of the byproducts (such as NiO, CoO and LiF, etc.) based on the solubility products on the pH , which are the only major impurities in the leaching solution and the Li₂CO₃ crystalline product. Sodium and sulfur impurities may emerge from environmental conditions, which are avoidable by controlling the environment. Analysis of the leachate and product are shown below in Fig. 3.

The amount of deionized water added for leaching, as shown at step 106, can be varied. For example, the ratio of water to the thermal treated black mass is approximately 5-40 by weight, preferably 15-20. The lithium leaching temperature is maintained at approximately 5-40°C, preferably about 20-30°C, and the agitation time is 10-240 minutes, preferably 20-60 minutes.

The solubility of Li₂CO₃ changes inversely with temperature, in contrast to most solutes. Therefore, recovery of the lithium can occur by heating the lithium leach solution, thereby precipitating the lithium carbonate based on decreased solubility of the leached lithium carbonate at the increased temperature. For example, as shown in Fig 1, the leached Li₂CO₃ is harvested by separating unleached solids out by filtration, at step 108, followed by heating of the filtrate to > 90°C for 10 -120 minutes, preferably 30-60 minutes, as shown at step 114. The filtered unleached solids prior to heating of the leach solution include delithiated NMC, typically decomposed NMC oxides such as NiO, MnO, Mn₃O₄, CoO, Co₃O₄, etc. and unreacted graphite, as disclosed at step 110. The filtered solids can then be fed to NMC and graphite recovery streams for further treatment, as depicted at step 112.

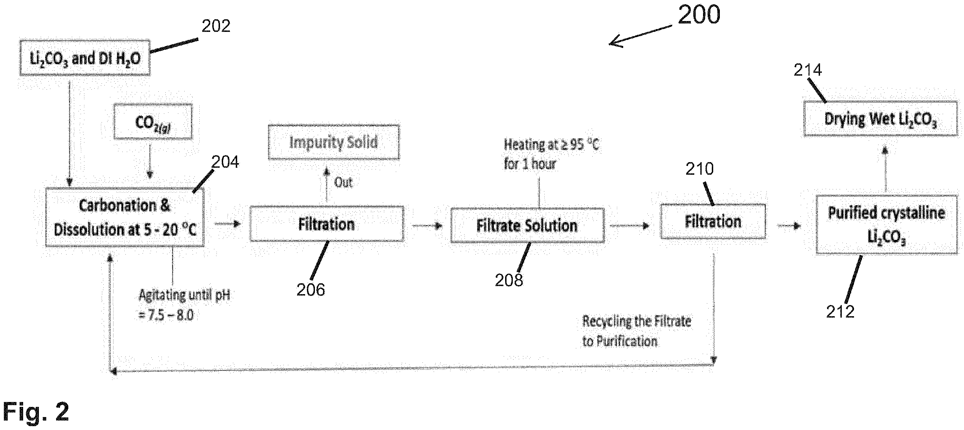

Filtering harvests the desired lithium product, lithium carbonate in the example of Fig. 1, as depicted at step 116. The aqueous filtrate may be recycled back to step 104 for a leaching cycle. The resulting filtered lithium carbonate solids, as depicted at step 118, is dried in a granular form, as shown at step 120. The dried lithium carbonate can then be further purified, if desired, an example of which is shown in Fig. 2.

For example, the lithium carbonate product from step 120 of Fig. 1 is at least technical grade (> 99% purity) and can be improved to battery grade by a simple purification 200. When lithium carbonate is dissolved in carbonated aqueous solution, lithium carbonate solubility is increased 5 times or more due to the conversion of less soluble lithium carbonate to highly soluble lithium bicarbonate. However, impurities do not dissolve and stay in the solid state for separation by filtration, shown by equation 3:

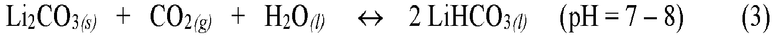

Equation 3 represents the combination of carbon dioxide with the recovered lithium carbonate for precipitating purified lithium carbonate. At step 202, the recovered lithium carbonate is dissolved in a water to form a solution. For purification of the lithium carbonate to battery grade lithium carbonate, the Li₂CO₃ is dissolved in DI (deionized) water by carbonation, depicted at step 204 (dissolving CO₂ in the solution), forming a carbonated solution. However, impurities in the lithium carbonate remain as solids. The impurity solids may be removed by micro-filtration, using a filter membrane of between 0.1-0.45 µm, as shown at step 206. Then, Li₂CO₃ is recovered by converting the much more soluble LiHCO₃ to a much less soluble Li₂CO₃ with heat at greater than 90°C, such as to a temperature of greater than or equal to 95°C for 1 hour, as depicted at step 208. Carbonization may be performed by bubbling the carbon dioxide through or by pressurizing carbon dioxide to the water solution of the leached lithium carbonate, and stirring, forming carbonic acid and undissolved solids. When the carbonation is completed, the aqueous solution of lithium bicarbonate achieves a pH between 7.0 - 8.5. Precipitated Li₂CO₃ by heating the lithium bicarbonate solution is filtered, as depicted at step 210, and the filtered yield at step 212 is dried to form battery grade lithium carbonate, as disclosed at step 214. The resulting lithium carbonate can be readily used as the lithium source in cathode material for recycled cells.

Fig. 3 is a results chart of the analysis of the leachate of Fig. 1. Small amounts of sodium, sulfur and aluminum may be removed by the purification of Fig. 2. It should be apparent that the sequence of the process of Figs. 1 and 2 yields battery grade lithium products in the form of lithium carbonate from the black mass of NMC or similar recycled batteries. The remaining black mass includes residual carbon (less than 15% is consumed) and delithiated charge material metals such as Ni, Mn, and Co.

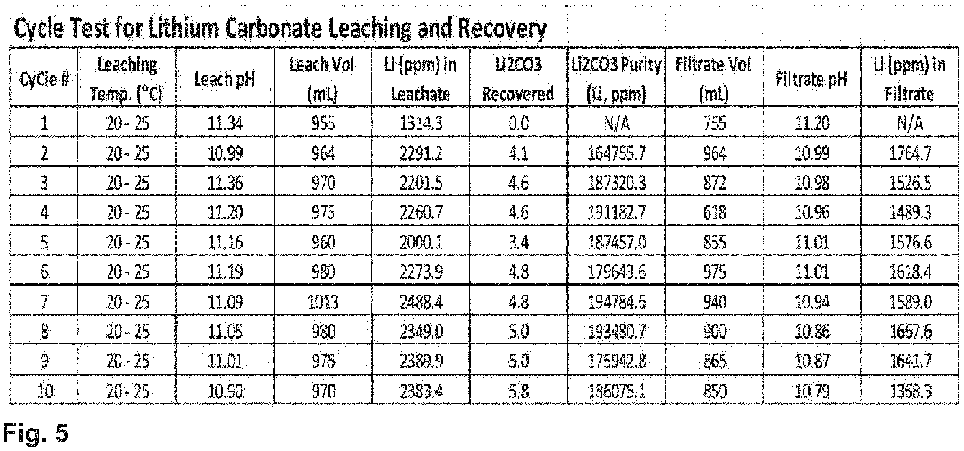

An example of the above approach is depicted in Figs. 4 and 5. In the example configuration, 20 Kg of black mass is roasted at 610 °C for 30 minutes with 3.5-4.5 % O₂ balanced with N₂ using a pilot rotary kiln.

In the example of Figs. 4 and 5, 50 g of the roasted black mass was added to 1 L of deionized water, and the mixture stirred for 30 minutes at the ambient temperature (~20°C). The solid was then removed by vacuum filtration with 1-µm filter paper. The filtrate was heated to > 90 °C for one hour. While heating the filtrate, Li₂CO₃ precipitated from the solution due to the low solubility at this higher temperature. The Li₂CO₃ product is collected via vacuum filtration with 0.45-µm filter membrane. The filtrate was fed to a subsequent leaching process using the same amount of the roasted black mass by adding a small amount of deionized water lost during the cycle. This cycle was repeated 10 times.

The Li₂CO₃ product collected above was purified as shown in Fig. 2. Thus, 12.6 g of the Li₂CO₃ was dispersed in 200 mL of DI water, and CO₂ was bubbled through the solution with mechanical stirring of the mixture at 5-20 °C. The CO₂ bubbling and stirring was continued until the solution pH reached 7.5-8.0. The undissolved solid was then removed by vacuum filtration using 0.1-0.2 µm filter membrane. The filtrate was heated to > 90 °C to convert highly soluble LiHCO₃ to much less soluble Li₂CO₃. Then, high purity (≥ 99.5 %) Li₂CO₃ precipitated from the solution, and the product was collected by vacuum filtration. The filtrate was recycled back to the next purification liquor.

Fig. 4 is a results chart of the Li purification of Fig. 2. As can be seen, substantial impurities are removed by the purification process, particularly for aluminum and sodium. Fig. 5 shows the results of 10 iterative cycles of Li recovery as in Fig. 1 to generate the interim lithium carbonate product prior to the purification in Fig. 2.

A method of producing purified, battery grade lithium carbonate from a black mass of an Li-ion battery recycling stream, may comprise the following steps:
heating a black mass from the recycling stream in a partial oxygen environment including 3-5% oxygen balanced by nitrogen at a temperature between 575°C and 650°C for a duration between 15 and 60 minutes to generate a roasted black mass;
leaching the roasted black mass in deionized water at a temperature between 5°C-25 °C at a water ratio of between 15-20 while agitating for 20-60 minutes to form a lithium leach solution;
filtering the lithium leach solution for removal of unleached solids;
harvesting lithium carbonate from the lithium leach solution by heating to a temperature greater than 90 °C for at least 30 minutes for separating Li₂CO₃ solids based on decreased solubility at higher temperatures;
dissolving the separated Li₂CO₃ solids in a carbonized, deionized water solution for filtering impurities as solids; and
heating the filtered, carbonized deionized water solution for precipitating purified lithium carbonate as temperature increases to greater than 90 °C.

While the system and methods defined herein have been particularly shown and described with references to embodiments thereof, it will be understood by those skilled in the art that various changes in form and details may be made therein without departing from the scope of the invention encompassed by the appended claims.

## Claims

1. A method for recovering lithium from a recycled battery stream, comprising:
roasting a black mass from the recycled battery stream in a partial oxygen environment at a temperature based on a thermal reduction of the cathode material;
leaching the lithium from the black mass to form a lithium leach solution; and
heating the lithium leach solution to recover the lithium as a precipitate.

2. The method of claim 1, wherein the partial oxygen environment has a lower concentration of oxygen than atmospheric oxygen and a nitrogen concentration greater than atmospheric nitrogen.

3. The method of any one of claims 1-2, wherein the partial oxygen environment comprises 3-5% oxygen.

4. The method of any one of claims 1-3 wherein the partial oxygen environment comprises greater than 80% of an inert gas.

5. The method of claim 4, wherein the inert gas is nitrogen.

6. The method of any one of claims 1-5, wherein the temperature for roasting the black mass is from 500 °C to 700 °C.

7. The method of any one of claims 1-6, wherein the temperature for roasting the black mass is from 575 °C to 650 °C.

8. The method of any one of claims 1-7, wherein the black mass is roasted for 30-60 minutes.

9. The method of claim any one of claims 1-8, wherein the black mass is leached with water and the black mass and the water are in a weight ratio of 15-20.

10. The method of claim any one of claims 1-9, wherein the black mass is leached at a temperature of 5 °C to 25 °C.

11. The method of claim any one of claims 1-10 wherein the precipitate is lithium carbonate.

12. The method of any one of claims 1-11, further comprising purifying the recovered lithium precipitate by:
combining carbon dioxide with the recovered lithium precipitate for selective dissolution of lithium carbonate by converting highly soluble lithium bicarbonate in water to form a carbonated solution, and
filtering undissolved impurity solids.

13. The method of any one of claims 1-12, wherein the carbonated solution comprises lithium bicarbonate.

14. The method of any one of claims 1-13, further comprising:
heating the carbonated solution to a temperature of greater than 90°C to form a purified lithium carbonate solid, and
filtering to remove the purified lithium carbonate solid.

15. The method of any one of claims 1-14 wherein heating the lithium leach solution precipitates lithium based on decreased solubility of the leached lithium at the increased temperature.
